# EUROPEAN PATENT APPLICATION

(11) **EP 1 428 586 A1**
(43) Date of publication of application: **16.06.2004**
(21) Application number: 03257878.3
(22) Date of filing: 15.12.2003
(51) Int. Cl.: B09B 3/00

(54) **Electrical equipments waste disposal method**

(30) Priority: 13.12.2002 GB 0229122
(71) Applicant: Encapsulated Waste Limited, Park Lane, Wolverhampton WV10 9QF (GB)
(72) Inventor: Barker, Jason Richard, c/o Encapsulated Waste Lim., Park Lane, Wolverhampton WV10 9QF (GB); Doherty, Francis Julian, c/o Encaps. Waste Limited, Park Lane, Wolverhampton WV10 9QF (GB)
(74) Representative: Dowler, Edward Charles

(57) **Abstract**

Method for the disposal of discarded electrical and electronic equipment comprises, instead of just buying the material in an environmentally unfriendly manner, dismantling the equipment as necessary, segregating the parts into those containing glass and other items, melting the glass parts and mixing all together to encapsulate the waste parts in the molten glass and forming pebble shaped ingots which can be used, e.g. as ballast or as a building aggregate.

## Description

This invention relates to waste disposal and in particular to the safe disposal of electronic equipment.

Increasingly, attention is being focussed on the safe disposal of scrapped electrical and electronic components and equipment. Until recently the usual method of disposal was to bury the scrap equipment in land-fill sites. Very little effort was expended in trying to recover recoverable products. More and more governments are bringing in legislation forcing original equipment manufacturers to provide safe disposal schemes to protect the environment. Within the EEC, there is a Regulation controlling the disposal of Waste Electrical and Electronic Equipment (WEEE). This Regulation requires manufacturers of electrical and electronic equipment, and waste disposal companies, to provide environmentally friendly and safe disposal of their scrapped or waste products.

In the past disposal by burying the equipment at land-fill sites was relatively cheap but not environmentally friendly. Many local authorities and governments now impose heavy taxes on land fill operations to encourage a more environmentally friendly way of disposing such waste. Because of reluctance to pay higher taxes to dispose of such waste in land-fill sites and a decrease in available sites, large stocks of scrapped equipment such as refrigerators, freezers, television sets, computers and other electrical and electronic equipment, are now building up at waste disposal sites.

One object of the present invention is to provide a method of disposal of WEEE that will comply with the tighter European Regulations and provide for safe disposal of WEEE goods in an environmentally acceptable way.

A further object of one aspect of the present invention is to provide a method of manufacturing aggregate material from the waste materials for use in the construction industry.

According to the invention, there is provided a method of disposal of electrical apparatus comprising the steps of :
a) manually dismantling the electronic apparatus and segregating circuit boards, scrap metal, plastic parts and glass parts;
b) processing the plastic materials into useable products;
c) segregating the different scrap metals and processing the segregated scrap metals into reusable revert metal;
d) separating the electronic components from the circuit boards mechanically; crushing and melting all glass components;
e) separating metals and other contaminants from the glass,
f) mixing the electronic components and other non useable waste from the process with the molten glass; and,
h) allowing the molten glass to solidify and form ingots encapsulating the electronic components.

The ingots may be utilised as aggregate or bulk filler especially for use in the construction industry.

According to another aspect of the invention, there is provided a method and apparatus for disposal of electrical equipment wherein the equipment is dismantled and separated into parts which do and do not contain glass, crushing and melting the parts which do contain glass and mixing the parts so that the non-glass containing parts are encapsulated by the molten glass.

Preferably, the parts are mixed and shaped for the molten glass to form rounded pebble-shaped ingots for use as aggregate.

For a better understanding of the invention and to show how the same may be carried into effect reference will now be made, by way of example, to the accompanying drawings, in which:
Figure 1 is a flow chart illustrating a first process for treating waste including waste electrical and electronic equipment (WEEE);
Figure 2 is a flow chart illustrating a second process for treating waste including WEEE;
Figure 3 is a flow chart illustrating part of a process for treating plastics material;
Figure 4 is a flow chart illustrating a further part of the process for treating plastics material; and
Figure 5 is a diagrammatic sectional view of a furnace installation.

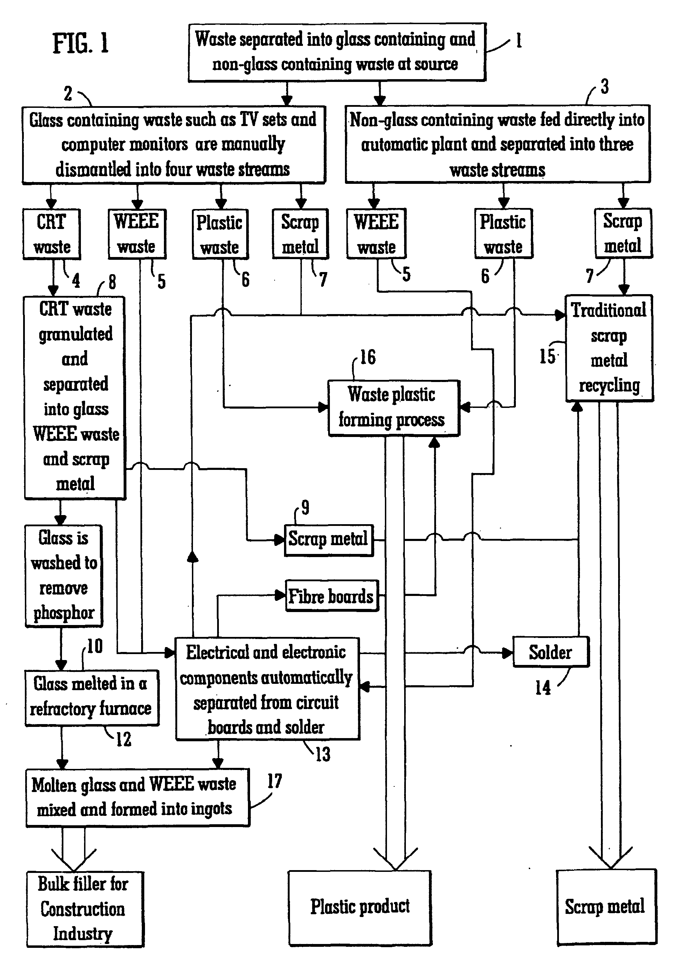

The Figure 1 flow chart relates to a waste disposal plant for dealing with several types of waste material, namely scrap metal waste plastics material and waste electrical and electronic equipment WEEEE. The WEEE will itself comprise different components, in particular plastics, metal, items not comprising glass and items which do comprise glass.

All of the material is received at a disposal station 1 and the waste is separated into two streams, namely glass containing waste 2 (such as TV sets, screens, cathode ray tubes, monitors and VDUs) and non-glass containing waste 3. At station 2, the WEEE goods are separated into four streams namely, cathode ray tubes 4, waste electrical and electronic equipment 5 and items such as electronic circuit boards and electronic components (referred to as WEEE in the flow chart), plastics waste 6, and scrap metal 7. At station 3, the waste from station 3 is separated into three streams namely, electronic circuit boards and other electronic components 5, plastics waste 6, and scrap metal 7. Any directly re-useable waste is separated manually from the rest of the waste.

At station 8 the glass components from station 4 are the broken up, granulated and separated into scrap metal 9 and glass waste 10. The glass waste 10 is washed at station 11 to remove phosphor and the washed glass is then melted in a refractory furnace 12. The molten glass, which may be highly contaminated and thus unsuitable for re-use to make bottles or the like, is used to encapsulate all the remaining waste as described below.

The WEEE items from stations 5 and 8 are passed to station 13 where the electronic components are separated from the circuit boards. The electronic components are separated from the circuit boards using a mechanical method in such a way that they are not opened up or damaged to release heavy metal contaminants to the atmosphere. The solder is melted from the boards at station 5 by heating the circuit boards and the solder saved at station 14 for recycling. The metal conductive tracks on the circuit boards are separated from the boards by heating them and the scrap metal returned with the scrap metal from stations 5 to a collection point 15. Metal components are sorted and segregated at station 15 into different types e.g. Non ferrous metals such as copper alloys and aluminium and into ferrous metals such as iron and steel, and the scrap metal is reprocessed though conventional routes to make revert metals.

The fibre and plastic circuit boards are sent to a plastics moulding station 16 that receives plastic waste from stations 6 and the plastic waste is moulded into plastic components for use in low grade plastic components for the construction industry or other uses.
The electronic components and WEEE goods from station 13 is mixed with molten glass from the furnace 12 and are encapsulated in the glass and cast into ingots at station 17. All of the scrap electronic components and the remaining non recoverable materials left over from the above described processes thus become inert ingots with all the contaminated and hazardous waste materials encapsulated in the glass.

The solidified ingots are considerably less in volume than the original television set and because they are inert they can be used in the construction industry as a bulk filler or aggregate. Clearly, because of the reduced volume of the encapsulated waste they can be stored more economically in long term land-fill sites or disposed in deep shaft disused mines or may be dumped at sea at much lower taxed costs than for the original volumes of waste.

The advantages of the process described above is that no virgin materials are added to the process and 100% of the incoming materials is either recycled or safely disposed of. None of the electronic components are broken or damaged in any way as this would release heavy metal contaminants to the atmosphere. No waste is generated.

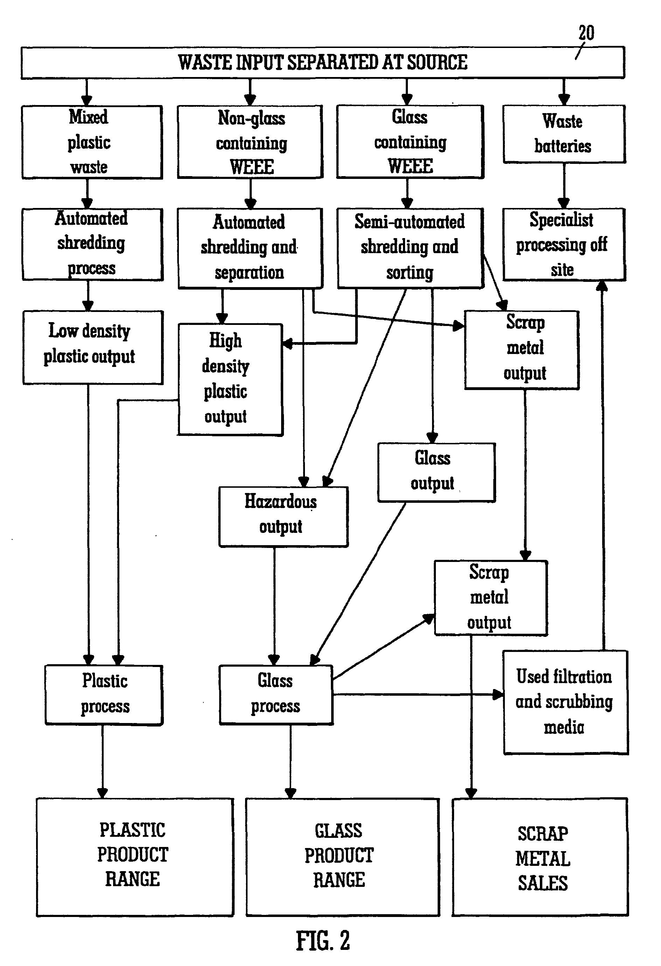

In a second embodiment of the invention as shown in Figure 2, waste material comprising mixed plastics material, WEEE and electrical storage batteries are received at a receiving station 20. This material is separated into four components, the mixed plastics and the electrical storage batteries, and WEEE which does and does not include glass.

The mixed plastic is received in two forms:
1) pre-shredded plastic from recycler companies and community recycling projects.
2) whole waste mouldings from de-manufacturing and refuse operations.

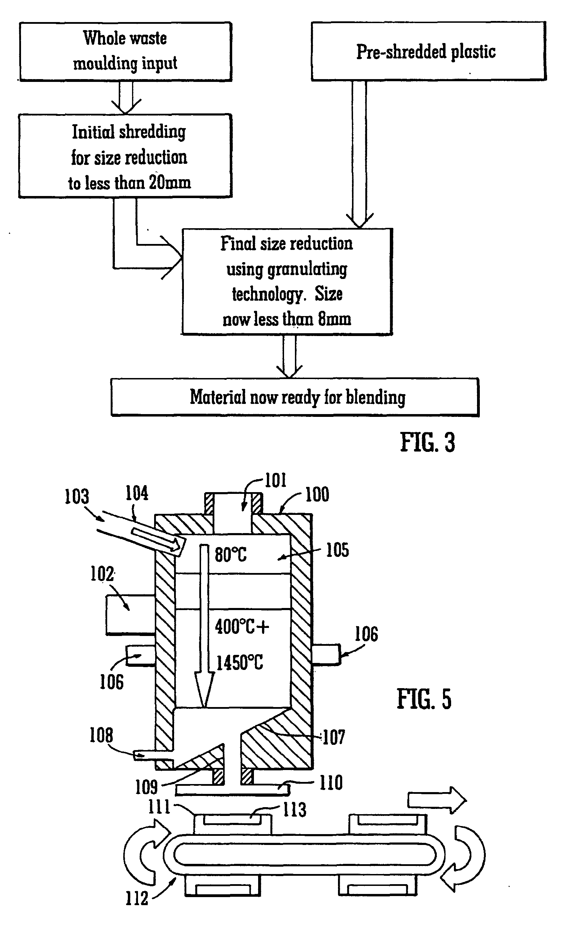

Figure 3 illustrates the process used for preparing the mixed plastic input.

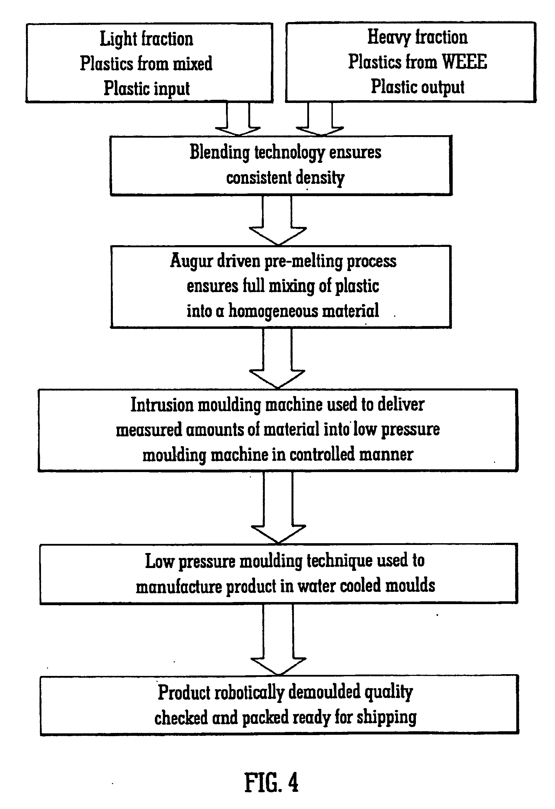

Because if its origin and the process by which it is made, the mixed plastic is relatively less dense than other plastics material made from the WEEE as described later. The light and the heavy material are brought together and blended as shown at Figure 4. The blended material is then processed as shown in the figure.

Meanwhile, the WEEE is sorted into:
1) non-glass containing WEEE;
2) glass containing WEEE.

Non-glass WEEE comprises of such items as Hi-Fi, computers, vacuum cleaners, hairdryers, etc.

Glass containing WEEE comprises of TV sets and Computer monitors as well any other products containing CRT technology such as oscilloscopes and closed circuit television monitors.

The non-glass containing WEEE is loaded directly into the WEEE plant and not touched by human hands again. Within the plant, the non-glass WEEE is separated from ordinary scrap and various types of hazardous material to leave waste plastics material, especially high density plastics. This is shredded as described with reference to Figures 3 and 4. The WEEE plant is sealed and a negative pressure is experienced within the WEEE thus capturing any dust and reducing the ambient noise levels. The WEEE plant size reduces the input waste through three stages until it is in particles of less than 6mm. Within the WEEE plant, the wanted materials are extracted from the waste leaving the hazardous portion behind. Magnets are used to extract the ferrous metals, eddy current and electrostatic techniques to remove the aluminium, copper, zinc, etc... and density separation techniques for removing the paper, wood and plastic. The WEEE plant has several key outputs as below:
- 1): Steel
- 2): Iron
- 3): Copper
- 4): Brass
- 5): Zinc
- 6): Aluminium
- 7): Plastic
- 8): Wood pulp
- 9): Paper pulp
- 10): Hazardous waste fraction

Preferably, the plant is designed to give a high degree of purity of each of the outputs so that each of the metal outputs can be sold directly back to the smelters and foundries as scrap, for premium prices.

Meanwhile, the wood and paper pulp is briquetted for use as solid fuel on domestic fires and wood burning stoves.
The plastic is sent to the plastic process line and the hazardous waste to the glass process line.

Due to the delicate nature of the CRT the glass containing WEEE requires special handling.

The glass containing WEEE is automatically loaded onto a conveyor belt and dealt with in the following way using a TV set as an example.
a) TV set is manually removed from the conveyor by an operator onto a work station (ball tables are used to minimise effort).
b) The operator uses air tools to remove the plastic case and drop it down a chute to a granulator. This plastic is then sent to the plastic production line.
c) The operator uses air tools to remove the larger circuit boards and electrical components and drops them down a chute to be sent to the WEEE line.
d) The operator removes any metal components to be sent directly to the scrap output area.
e) The operator returns the stripped CRT to the conveyor.

There are several stations operating in series along the conveyor.

The stripped CRT's are sent to an automated crushing machine where the phosphorous is removed using air and bulked up before being transferred to the glass product line. The crushed CRT is sent through a final metal removal process and then sent to the glass production line. This whole process is contained and automated, no contaminants are allowed to be released into the atmosphere.

A cold-feed continuous flow furnace is preferred as it allows a steady flow rate of work to be achieved once the furnace is up to temperature. This maximises thermal efficiency as it is not necessary to keep bringing the furnace up to temperature as with batch production. It does however require continuous 24 hour production with scheduled maintenance needing a total furnace shut down.

The batch blanket principal acts as both a thermal insulator for the reactions occurring below it and as a scrubber for any fumes trying to escape through it. The cold input material causes any fumes encountering it to condensate and be trapped in the batch blanket. The contaminants are therefore held in the furnace and forced to enter the reaction zone.

Each furnace is designed to allow a four-hour residence time in the reaction zone and shear timing is adjusted to allow difference shot weights for different products. This is done automatically via a PLC control to allow batch quantities of one to be achieved when necessary.

The hazardous waste portion (including the phosphorous compounds liberated during the glass crushing process) and the crushed glass is mixed together and transferred to a cold-feed continuous flow furnaces as shown in Figure 5.

The furnace of Figure 5 comprises a hollow housing 100 made of refractory material or metal enclosed with insulating material. A flue 101 is provided at the top of the housing and the housing is provided with a gas fuelled pre-heater 102 to bring the contents of the furnace up to a sufficient temperature for it to conduct electricity. A mixture 103 of pre-dried glass from cathode ray tubes and the like along with WEEE fragments are allowed into the furnace via an entry duct 104.

Within the furnace, a series of different temperature zones are created. At the top there is a mixture entry area 105 in which the temperature is at about 80°c. Beneath this area, and separated from it by a batch blanket zone, there is a reaction zone in which the temperature increases from around 400°C at the top to 1450°C further down, this upper temperature being produced by an electrical resistance heater 106.

Near the lowest point of the sloping floor 107 of the furnace, there is a drain 108 for releasing solid contaminants from the furnace and, at about the middle of that floor, i.e. so that it is higher than drain 108, there is an output chute 109 which is cooled by water-cooling means (not shown). Molten glass containing WEEE components are cut by a shear mechanism 110 and the cut portions are dropped into water cooled ingot moulds 111 supported on an output conveyor mechanism 112. The ingots 113 are passed along the conveyor and annealed at 400 - 500oC and released from the moulds to be collected together for use, for example, as filler or aggregate in the construction industry.

## Claims

1. A method of disposal of electrical apparatus comprising the steps of :
a) manually dismantling the electronic apparatus and segregating circuit boards, scrap metal, plastic parts and glass parts;
b) processing the plastic materials into useable products;
c) segregating the different scrap metals and processing the segregated scrap metals into reusable revert metal;
d) separating the electronic components from the circuit boards mechanically;
f) crushing and melting all glass components;
g) separating metals and other contaminants from the glass,
f) mixing the electronic components and other non useable waste from the process with the molten glass; and,
h) allowing the molten glass to solidify and form ingots encapsulating the electronic components.

2. A method according to claim 1, wherein the ingots are utilised as aggregate or bulk filler for use in the construction industry.

3. A method according to claim 2, wherein ingots are used as a bulk filler.

4. Method and apparatus for disposal of electrical equipment wherein the equipment is dismantled and separated into parts which do and do not contain glass, crushing and melting the parts which do contain glass and mixing the parts so that the non-glass containing parts are encapsulated by the molten glass.

5. Method and apparatus according to Claim 4, wherein the parts are mixed and shaped for the molten glass to form rounded pebble-shaped ingots for use as aggregate.
